# EUROPÄISCHE PATENTANMELDUNG

(11) **EP 1 403 157 A1**
(43) Veröffentlichungstag der Anmeldung: **31.03.2004**
(21) Anmeldenummer: 03016947.8
(22) Anmeldetag: 25.07.2003
(51) Int. Cl.: B60T 8/00, B60K 23/08, B60K 23/04

(54) **Verfahren zur Regelung des Fahrverhaltens mittels Einflussnahme auf die Giergeschwindigkeit**

(30) Priorität: 26.09.2002 DE 10245032
(71) Anmelder: Dr.Ing. h.c.F. Porsche Aktiengesellschaft, 70435 Stuttgart (DE)
(72) Erfinder: Bastian, Klaus, 75242 Neuhausen (DE); Frank, Jan, 75203 Königsbach-Stein (DE); Hofbauer, Markus, 73098 Rechberghausen (DE)

(57) **Zusammenfassung**

Es wird ein Verfahren zur Regelung des Fahrverhalten von Fahrzeugen mit einer regelbaren Längskupplung und/oder einer regelbaren Hauptachsen-Quersperre bei Allradsystemen und einer regelbaren Quersperre bei Fahrzeugen mit Einachsantrieb vorgeschlagen. Hierbei werden zunächst die Eingangsgrößen erfasst und aufbereitet und anschließend erfolgt ein Vergleich von gewünschter Fahrtrichtung, welche über den Lenkwinkel (LW) bestimmt wird, und tatsächlicher Bewegungsrichtung (BR) des Fahrzeuges. Wenn beide Werte um eine vorgebbaren Referenzwert (RW) voneinander abweichen, wird zur Erhöhung der Gierdämpfung die Kopplung zwischen Vorderachse und Hinterachse des Fahrzeuges erhöht oder bei vorhandener regelbarer Hauptachsen-Quersperre das Sperrmoment der Quersperre erhöht oder beide Maßnahmen gleichzeitig eingeleitet.

## Beschreibung

Die vorliegende Erfindung betrifft Fahrzeuge mit offenen Antriebssträngen, welche besonders bei Kurven im Grenzbereich beim Übergang zum Übersteuern hohe Giergeschwindigkeiten sowie hohe Gierbeschleunigungen erreichen. Diese Giergeschwindigkeiten bzw. Gierbeschleunigungen erfordern vom Fahrer ein hohes Maß an Fahrkönnen. Zur Vermeidung kritischer Situationen werden daher diese Fahrzeuge von vorne herein oft deutlich untersteuert ausgelegt. Aus der DE 198 30 561 C2 ist bereits eine Fahrverhaltensregelung zur Verhinderung einer Schleuder- und/oder Abtriftbewegung eines Fahrzeuges und im besonderen eine Fahrverhaltensregelvorrichtung zur Steuerung des Bremssystems eines Fahrzeuges bekannt. Bei diesem bekannten System wird ein ausgewähltes Rad, oder mehrere ausgewählte Räder kontrolliert abgebremst, um einen Anstieg der Abweichung der über einen Giergeschwindigkeitssensor erfassten tatsächlichen Giergeschwindigkeit von einer aus dem Lenkwinkel und der Fahrzeuggeschwindigkeit abgeschätzten Soll - Giergeschwindigkeit entgegenzuwirken. Wird die Abweichung größer als ein bestimmter Stellwert, greift das System ein. Aus dem bekannten Stand der Technik ist eine Vorrichtung bekannt, mittels welcher auf der Basis einer verbesserten Abschätzung der Abweichung der über einen Giergeschwindigkeitssensor erfassten tatsächlichen Giergeschwindigkeit von der aus dem Lenkwinkel und der Fahrzeuggeschwindigkeit abgeschätzten Soll - Giergeschwindigkeit das Fahrzeugverhalten angemessen geregelt wird.

Die vorliegende Erfindung der Lateral Correction beschreibt ein einfaches und schnell einsetzbares System für eine Strategie zur Ansteuerung der regelbaren Längskupplung und/oder der Hauptachsenquersperre bei Allradsystemen bzw. auch der regelbaren Quersperre Fahrzeugen mit Einachsantrieben zur Verbesserung der Fahrdynamik.

Durch die erfindungsgemäße Beeinflussung der Momentenverteilung zwischen den Achsen und/oder die Veränderung des Sperrwertes an der Quersperre kann die Dämpfung der Gierbewegung erhöht werden. Dies führt zur Stabilisierung des Fahrzeuges.

Vorteilhafterweise sind die erforderlichen Eingangsgrößen für das erfindungsgemäße Verfahren aufgrund der modernen Technik im Fahrzeug bereits vorhanden und die Signale der Sensoren bzw. die im Datenbus vorliegenden Informationen sind nur noch vom Steuergerät auszulesen. Im Fahrzeug bereits bekannte Größen sind der Gierwinkel, die Gierwinkelgeschwindigkeit, die Gierwinkelbeschleunigung oder die Querbeschleunigung und der Fahrtrichtungswunsch des Fahrers, welcher z. B. über den Lenkwinkel bestimmt wird. Komplizierte zusätzliche Berechnungen sind nicht notwenig, da all diese Daten bereits aufbereitet im Fahrzeug vorhanden sind und nur der entsprechender Datenaustausch erfolgen muss.

Ein weiterer Vorteil ist, dass die erfindungsgemäße Regelstrategie sowohl bei Allradantrieb mit Längskupplungen, bei Allradantrieb mit regelbarem Hang - on - Systemen, bei Allradantrieb mit fester Verteilung und regelbarer Längssperre, beim Allradantrieb mit regelbarer Hinterachsenquersperre als auch bei einachsgetriebenen Fahrzeugen mit regelbarer Quersperre eingesetzt werden kann.

Bei all diesen Verfahren ist das erforderliche Kupplungsmoment eine Funktion von Fahrgeschwindigkeit, Fahrrichtungswunsch des Fahrers und tatsächliche Fahrtrichtungsänderung des Fahrzeuges. Der sich aus diesen Eingangsgrößen ergebende Wert für das Sperrmoment kann über mehrere Kennlinien bzw. Kennfelder und mit Variablen für Längs- und Quersperre getrennt appliziert und entsprechend im Steuergerät abgelegt werden. Die Applikation erfolgt hierbei vorteilhafterweise individuell auf Fahrzeugtyp und Motorisierung abgestimmt.

Letztendlich ist es vorteilhaft, eine Ansprechwelle für das Eingreifen der Regelstrategie vorzusehen. Hier kann ein Referenzwert vorgegeben werden, der die zulässige Abweichung von Ist- und Sollwert angibt.

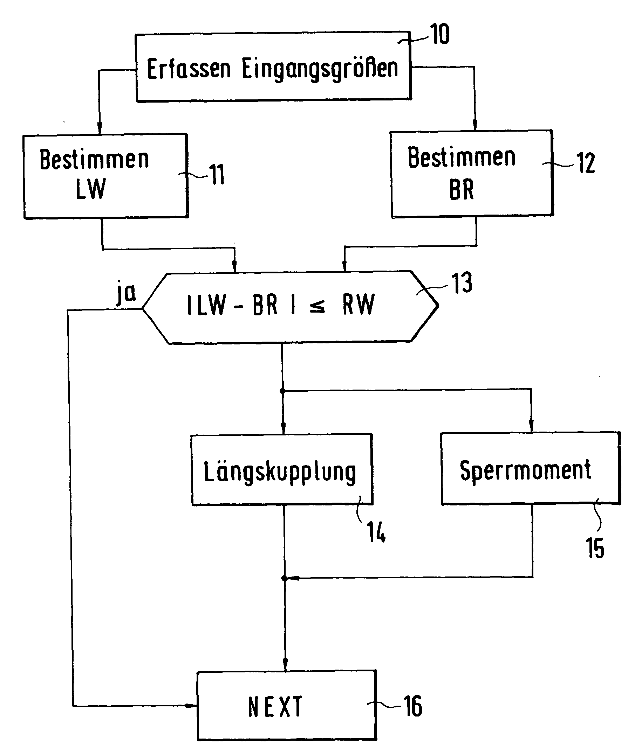

Eine Ausführungsform der erfindungemäßen Steuerung ist in der Figur dargestellt und im folgenden näher erläutert.

Die Figur zeigt einen Ablaufplan zur Durchführung des Verfahrens in schematischer Übersicht. Das bedeutet, in der Figur sind nur die wesentlichen Verfahrensschritte dargestellt, ohne hierbei auf weitere Einflussgrößen einzugehen. Damit kann eine übersichtliche und einfache Darstellung gewählt werden.

In einem ersten Arbeitsschritt 10 werden zunächst die notwenigen Eingangsgrößen alle am Fahrzeug vorhandenen, jedoch hier nicht dargestellten, Sensoren zur Ermittlung der Gierbewegung, der Gierbeschleunigung, des Gierwinkels, der Gierwinkelbeschleunigung oder der Querbeschleunigung, dem Fahrtrichtungswunsch des Fahrers, die Fahrgeschwindigkeit und weitere Eingangsgrößen, die zur Erkennung und Bestimmung der aktuellen Fahrsituation benötigt werden, erfasst. Aus diesen Eingangswerten wird nun in einem nachfolgenden Arbeitschritten 11 der Fahrtrichtungswunsch des Fahrers beispielsweise aufgrund des Lenkwinkel LW bestimmt und in einem Arbeitsschritt 12 die tatsächliche Bewegungsrichtung BR des Fahrzeuges ermittelt. Diese beiden Schritte können, wie hier dargestellt, zeitgleich oder nacheinander ablaufen. Anschließend wird im Arbeitsschritt 13 ein Vergleich dieser beiden Größen Lenkwinkel LW und Bewegungsrichtung BR durchgeführt. Beim Vergleich der beiden Werte wird ein vorgebbarer Referenzwert RW berücksichtigt, um welchen die beiden Werte Lenkwinkel LW und Bewegungsrichtung BR voneinander abweichen dürfen. Dies erfolgt im Arbeitsschritt 13 in der Art, dass zunächst die Differenz aus dem Lenkwinkel LW und der Bewegungsrichtung BR gebildet wird und der Betrag dieser Differenz (ILW - BRI) mit dem Referenzwert RW verglichen wird. Ist dieser Betrag der Differenz kleiner oder gleich dem vorgebbaren, zulässigen Referenzwertes RW, wird eine ordnungsgemäße Fahrsituation erkannt und der Ja-Ausgang des Arbeitsschrittes 13 springt an das Ende dieses Verfahrens zum Schritt 16, so dass eine neue Auswertung erfolgen und die nächsten Eingangsgrößen erfasst und ausgewertet werden. Ist der Betrag der Differenz aus Lenkwinkel LW und Bewegungsrichtung BR allerdings größer als der vorgebbare Referenzwert RW, dann erkennt das Verfahren, dass das Fahrzeug sich in einem instabilen übersteuerten Bereich befindet und es erfolgt im Arbeitsschritt 14 eine entsprechende Ansteuerung der Längskupplung, so dass die Gierdämpfung erhöht und damit die Kopplung zwischen Vorder- und Hinterachse ebenfalls erhöht wird. Bei Fahrzeugen mit regelbarer Hinterachs - Quersperre kann zusätzlich oder alternativ zum Arbeitsschritt 14 im Arbeitsschritt 15 das Sperrmoment angepasst werden. Ist dieser Eingriff erfolgt, führt der Ausgang der Arbeitsschritt 14 und 15 ebenfalls in den Arbeitsschritt 16, in welchen wiederum die nächste Arbeitssituation erfasst wird.

Das erforderliche Kupplungsmoment ist eine Funktion von Fahrgeschwindigkeit, Fahrtrichtungswunsch des Fahrer und tatsächlicher Fahrtrichtungsänderung des Fahrzeuges. In die Bestimmung können noch weitere Parameter einfließen.

Der Wert für das Sperrmoment ist über mehrere Kennlinien bzw. Kennfelder und Variablen für Längs- und Quersperre getrennt applizierbar. Die Applikation erfolgt in der Regel individuell auf Fahrzeugtyp und Motorisierung abgestimmt. Ja nach Auslegung der Fahrwerksabstimmung ist eine unterschiedliche Abstimmung der Funktion für Zug- und Schubbetrieb möglich.

Das Festlegen einer Ansprechschwelle, die durch den Referenzwert angegeben wird, für die beschriebene Regelung hat den Vorteil, unplausible Regelungen im Bereich um Null zu verhindern.

## Patentansprüche

1. Verfahren zur Regelung des Fahrverhalten von Fahrzeugen mit einer regelbaren Längskupplung und/oder einer regelbaren Hauptachsen-Quersperre bei Allradsystemen und einer regelbaren Quersperre bei Fahrzeugen mit Einachsantrieb, wobei zunächst die Eingangsgrößen erfasst und aufbereitet werden, anschließend erfolgt ein Vergleich von gewünschter Fahrtrichtung, welche über den Lenkwinkel (LW) bestimmt wird, und tatsächlicher Bewegungsrichtung (BR) des Fahrzeuges, weichen beide Werte um eine vorgebbaren Referenzwert (RW) voneinander ab, wird zur Erhöhung der Gierdämpfung die Kupplung zwischen Vorderachse und Hinterachse des Fahrzeuges erhöht oder bei vorhandener regelbarer Hauptachsen-Quersperre das Sperrmoment der Quersperre erhöht oder beide Maßnahmen gleichzeitig eingeleitet.

2. Verfahren nach Anspruch 1, **dadurch gekennzeichnet, dass** der Referenzwert in der Applikation fahrzeug- und motorspezifisch ermittelt wird.

3. Verfahren nach Anspruch 1, **dadurch gekennzeichnet, dass** der Wert für das Sperrmoment in Kennfeldern abgelegt ist.

4. Verfahren nach Anspruch 1, **dadurch gekennzeichnet, dass** das Kupplungsmoment zwischen Vorder- und Hinterachse eine Funktion von Fahrgeschwindigkeit, Fahrtrichtungswunsch des Fahrers und tatsächlicher Fahrtrichtungsänderung des Fahrzeuges ist.
